# EUROPEAN PATENT SPECIFICATION

(11) **EP 2 632 275 B1**
(45) Date of publication and mention of the grant of the patent: **20.08.2014**
(21) Application number: 11778801.8
(22) Date of filing: 25.10.2011
(51) Int. Cl.: A21D 8/00, A21D 13/00, A23B 5/00

(54) **METHOD AND APPARATUS FOR COOKING PIZZA.**
VERFAHREN UND VORRICHTUNG ZUM BACKEN VON PIZZEN
PROCÉDÉ ET APPAREIL DE CUISSON DE PIZZA

(30) Priority: 29.10.2010 IT AL20100029 U
(43) Date of publication of application: 04.09.2013
(73) Proprietor: Giordano, Giuseppe, 15100 Alessandria (IT)
(72) Inventor: Giordano, Giuseppe, 15100 Alessandria (IT)
(74) Representative: Forattini, Amelia
(86) International application number: PCT/EP2011/005359
(87) International publication number: WO 2012/055531

(56) References cited:
- GB-A- 2 376 867
- US-A- 4 367 243
- US-A- 4 632 836
- US-A1- 2006 240 153

## Description

The present invention relates to a method and an apparatus for cooking pizza. Traditional Neapolitan pizza contains flour, salt, water, and yeast.

Those ingredients are combined to make a dough ball, by mixing and kneading.

After rising, the dough ball is made into a pie by making a little rim and spreading the dough on a marble surface sprinkled with flour.

After spreading the desired sauce and toppings onto the rimmed pie, the pie is slid into the oven on a long paddle, called a peel, and baked directly on the bottom surface of the oven, preferably the hot bricks of a wood fired brick oven.

Cooking time is a few minutes at a relatively high temperature, for example, two minutes, at well over 450°C.

The pie is cooked by resting directly on the scorching surface of the oven, thus providing a pizza with a slightly charred crust, which should be thin and soft, and a well-defined cornice which is slightly tougher than the base crust.

Another type of pizza is the so called pan pizza or deep-dish pizza which is baked into a deep-sided pan.

Deep-dish pizza has a very thick crust and a softer rim because the heat does not directly hit the sides and bottom of the pie, which are protected by the pan.

A problem of the traditional cooking method of a Neapolitan pizza is that a considerable skill is required for forming the pie. Only an experienced pizza baker may suitably form a pie that, after baking, has a soft thin crust and a soft edible cornice.

Still, either because of personal taste or because the cornice is not baked correctly, the cornice of the pizza is often discarded because it is considered too tough to eat.

Baking a pan pizza does not require any particular skill and, given the appropriate time and temperature, a pan pizza will always come out soft and thick as required.

The baking time of a pan pizza is considerably longer than the baking time of a traditional pizza and, more importantly, the baking temperature of a pan pizza is considerably lower that the temperature required for a traditional pizza of the same size.

Therefore, an establishment that wishes to offer both types of pizza should have two ovens, operating at different temperatures, or should have a skilled baker that can manage to bake the two types of pizza in one high temperature oven. This is achieved by baking the pan pizza in a position inside the oven where the temperature is lower, such as in proximity of the oven opening.

While positioning a pan inside the oven is a simple operation, sliding a traditional pizza deep into the oven, without deforming or breaking the pie, requires some skill.

The same skill is required for turning the pizza while baking, which also requires manual skill and experience. Several pies are usually cooked at the same time inside a brick oven and, depending on the their position, each pie has to be turned around, once or more, to ensure a uniform baking.

The aim of the present invention is to provide a method for cooking pizza that combines the advantages of the traditional Neapolitan pizza with the easiness of preparing and cooking a pan pizza.

A particular object of the invention is to provide a method for cooking a traditional Neapolitan pizza that has a softer cornice.

A further important object of the invention is to provide a method that allows even inexperienced bakers to cook a good pizza.

A further object of the invention is to provide a method suitable for baking focaccia.

The above aims and other aims that will be more apparent hereinafter, are achieved by a method for cooking pizza, comprising the steps of spreading a dough ball on a surface and forming a pie within a ring;
sliding said pie, contained in said ring, into an oven allowing said pie to rest directly in contact with a bottom surface of said oven;
removing said pie from the oven;
removing said pie from said ring.

The above aims and other aims that will be more apparent hereinafter, are also achieved by an apparatus for cooking pizza, characterized in that it comprises a ring wherein a pie is formed while resting on a surface; said ring being adapted to contain said pie while said pie is baked inside an oven, where the bottom of said pie is resting directly in contact with a bottom surface of said oven.

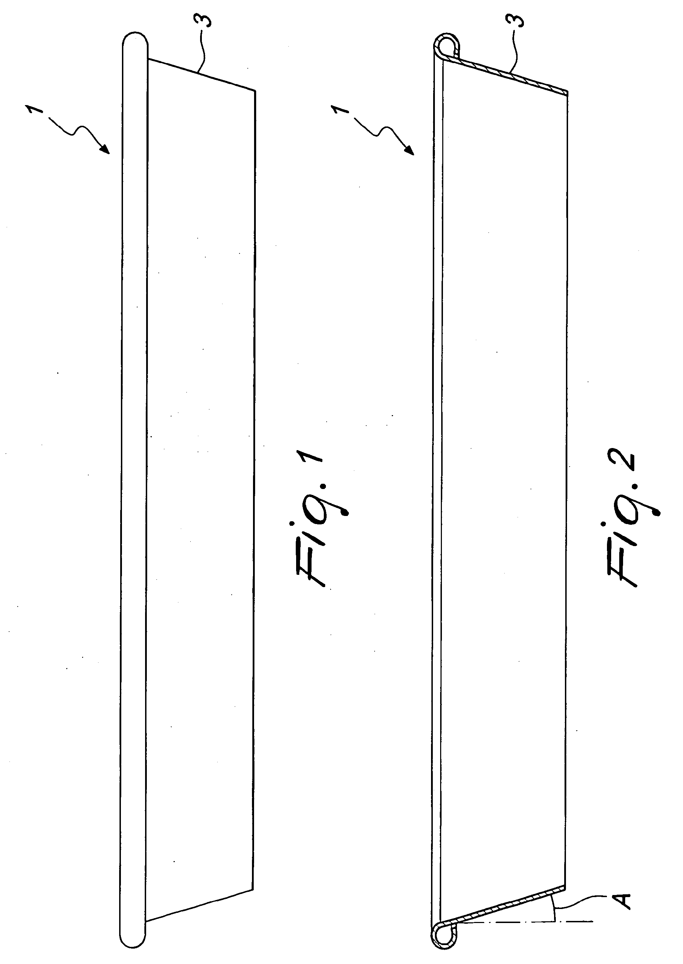

Further characteristics and advantages of the invention will be more apparent by the following description of an embodiment of the invention, illustrated, by way of example in the enclosed drawings, wherein
Figure 1 is a side view of a ring for use in the cooking method according to the present invention;
Figure 2 is a side sectioned view of the ring of the preceding figure;

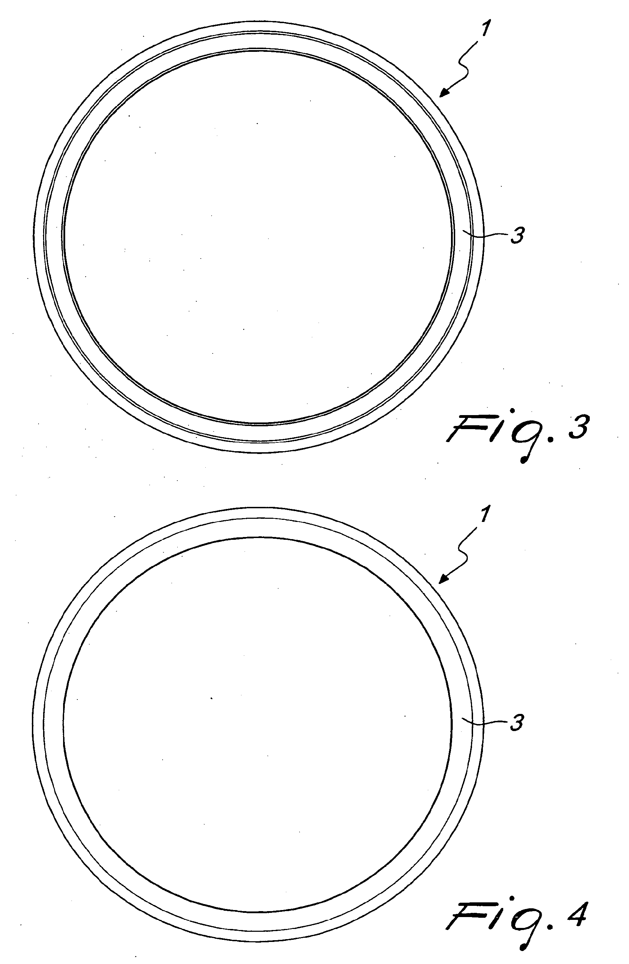

Figure 3 is a bottom view of the ring of the preceding figures;
Figure 4 is a top view of the ring of the preceding figures;

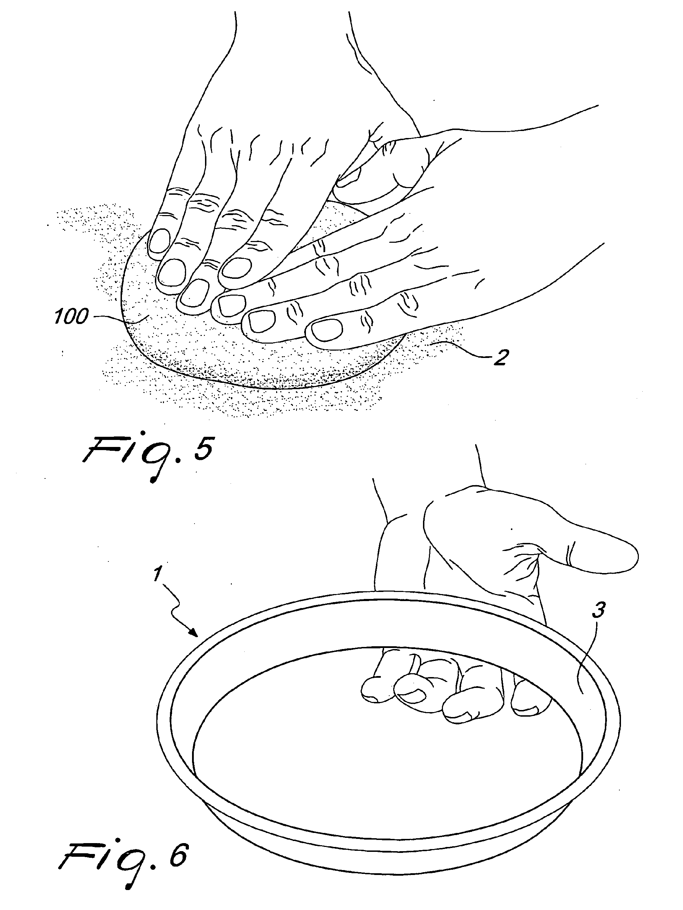

Figure 5 shows the step of spreading the dough ball into a pie;
Figure 6 is a perspective view of the baking ring;

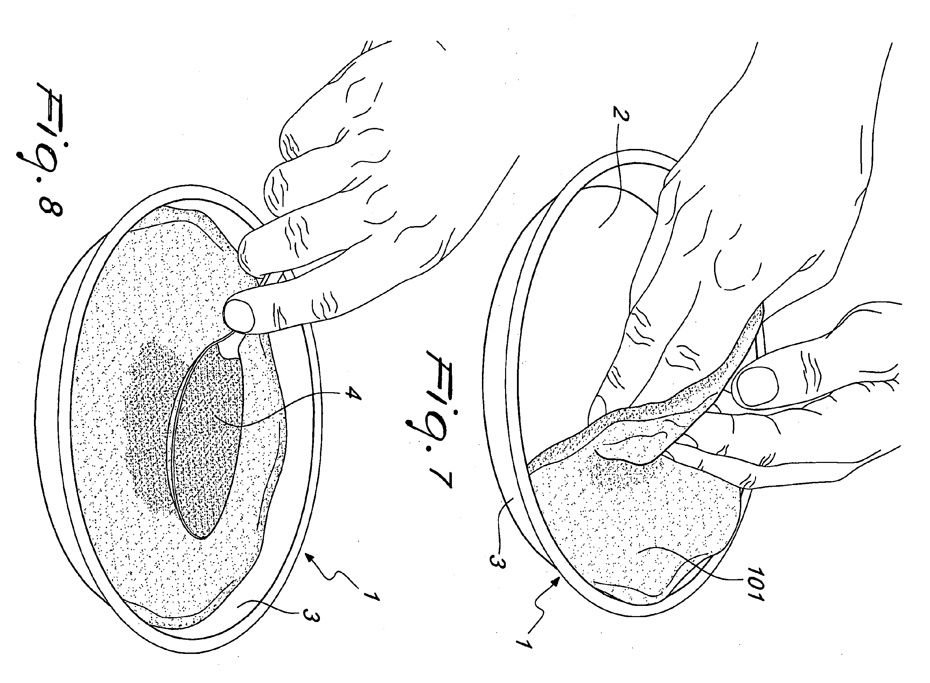

Figure 7 shows he step of spreading the pie inside the ring;

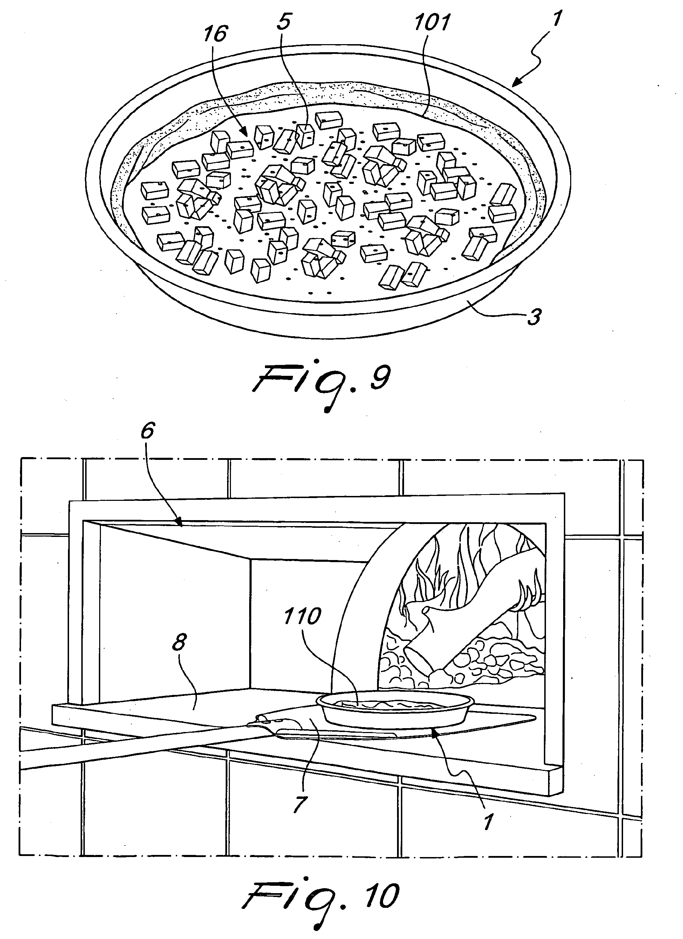

Figures 8 and 9 show the step of putting sauce and toppings onto the pie;
Figure 10 shows the step of sliding the pie into the oven;
Figure 11 shows the step of extracting the baked pizza from the ring.

With reference to the above figure, the method for cooking pizza, according to the present invention, comprises, on a surface 2, working a dough ball 100 into a pie 101 and spreading the pie 101 inside a ring 1.

Preferably, the pie should have a thickness adapted to ensure that the pie does not rise above the ring during baking. The uncooked pie should, for example, have a thickness of about one third of the height of the ring. It is in fact preferable that the sides of the pie stay within the ring and are not exposed to direct heat.

The ring is constituted by a vertically extending wall 3, preferably inclined with an angle A.

The ring 1 can be seen as a bottom-less pan. The ring 1 may in fact be manufactured by cutting off the bottom of a traditional baking pan.

The ring may be circular, as in the embodiment shown in the figures, or quadrangular, or of any other polygonal shape.

The wall 3 may be angled by an angle A, as in the illustrated embodiment, or substantially vertical, i.e. at 90° with respect to the working surface 2.

The ring is preferably made of metal and should be adapted to withstand the high temperatures of a baking oven.

After forming the pie 101 inside the ring 1, a sauce 4 and toppings 5 may be added on top of the pie 101, thus forming a pizza pie 110.

The pizza pie 110 is then slid inside an oven 6, typically by means of a peel 7, and left to bake inside the ring 1 and directly in contact with the bottom surface 8 of the oven 6.

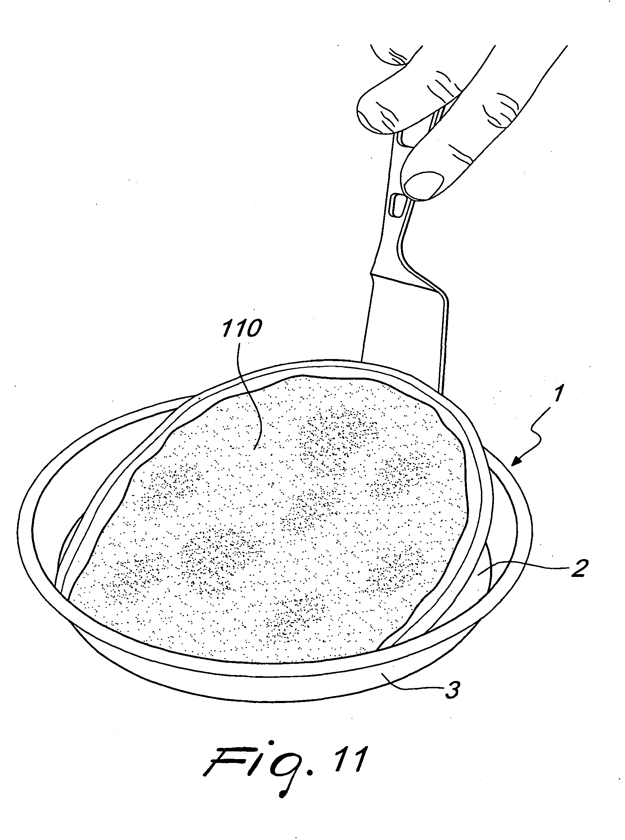

When done, the pizza pie is extracted from the oven and removed from the ring 1, as visible in figure 11.

The baking time of the pie 110, when using the ring 1, is about twice as longer than the time required, for a same size of pie and at the same oven temperature, of a pie baked in the traditional way but considerably less than the time required for cooking in a traditional pan.

According to the baking method of the present invention, with the pie resting directly on the oven surface and surrounded by the ring 1, the cooked pizza has a crust which is crisp outside and soft inside, similar to a traditional Neapolitan pizza, while at the same time the pizza has a soft cornice, similar to a pan pizza.

The above effect results from the fact that the metal ring encircling the pie diffuses the heat on the sides of the pie, while the bottom and top surfaces of the pie are directly exposed to the intense heat.

The method according to the present invention is also suitable for cooking a focaccia with the same advantages as the ones described above for pizza.

An important advantage of the method according to the present invention is that preparing the pie inside the ring does not require particular skill. In other words, the pizza baker does not need to form a suitable rim around the pie because the ring will in any case help the baking process and ensure a soft cornice.

Also, the ring will help the baker slide the pie into the oven, because the ring ensures that the pie does not break or warp. Any baker, with no particular skill or experience, may easily slid the ringed pies in and out.

The ring also ensures a uniform cooking of the pie, with little or no need to turn the ringed pie while cooking. In any case, turning around the ringed pie is very easy with respect of turning around a traditional pie, without breaking it.

The method according to the present invention is therefore particularly advantageous for chain restaurants, franchises, and all establishments where it may be difficult to secure the services of a skilled pizza baker.

A further advantage of the present invention is that, given the same equipment and ingredients, all the establishments of a chain or franchise will ensure a uniform, recognizable product, of high quality, because the present method relies less on individual skill and experience. Also, new staff may be trained in a short time.

## Claims

1. A method for cooking pizza, comprising the steps of spreading a dough ball on a surface and forming a pie within a ring;
sliding said pie, contained in said ring, into an oven allowing said pie to rest directly in contact with a bottom surface of said oven;
removing said pie from the oven;
removing said pie from said ring.

2. The method, according to claim 1, **characterized in that** it comprises a step of adding sauce after said step of forming said pie within said the ring.

3. The method, according to claim 1, **characterized in that** it comprises a step of adding toppings after said step of forming said pie within said the ring.

4. An apparatus for cooking pizza, **characterized in that** it comprises a ring wherein a pie is formed while resting on a surface; said ring being adapted to contain said pie while said pie is baked inside an oven, where the bottom of said pie is resting directly in contact with a bottom surface of said oven.

5. The apparatus according to claim 4, **characterized in that** said ring is constituted by a vertically extending wall.

6. The apparatus according to claim 4, **characterized in that** said ring is constituted by a vertically extending inclined wall.

## Patentansprüche

1. Ein Verfahren zum Backen von Pizza, das folgende Schritte umfasst: Ausbreiten einer Teigkugel auf einer Oberfläche und Formen eines Fladens innerhalb eines Rings;
Schieben des in den Ring eingeschlossenen Fladens in einen Ofen, wobei der Fladen direkt in Kontakt mit einer Bodenfläche des Ofens gelassen wird;
Entfernen des Fladens aus dem Ofen;
Entfernen des Fladens aus dem Ring.

2. Das Verfahren gemäß Anspruch 1, **dadurch gekennzeichnet, dass** es einen Schritt der Hinzugabe von Sauce nach dem Schritt des Formens des Fladens innerhalb des Rings umfasst.

3. Das Verfahren gemäß Anspruch 1, **dadurch gekennzeichnet, dass** es einen Schritt des Hinzufügens von Belägen nach dem Schritt des Formens des Fladens innerhalb des Rings umfasst.

4. Eine Vorrichtung zum Backen von Pizza, **dadurch gekennzeichnet, dass** sie einen Ring umfasst, in dem ein Fladen geformt ist, während er auf einer Oberfläche aufliegt, wobei der Ring ausgebildet ist, um den Fladen einzuschließen, während der Fladen in einem Ofen gebacken wird, wobei der Boden des Fladens direkt im Kontakt mit einer Bodenfläche des Ofens steht.

5. Die Vorrichtung gemäß Anspruch 4, **dadurch gekennzeichnet, dass** der Ring aus einer sich vertikal erstreckenden Wand besteht.

6. Die Vorrichtung gemäß Anspruch 4, **dadurch gekennzeichnet, dass** der Ring aus einer sich vertikal erstreckenden schrägen Wand besteht.

## Revendications

1. Procédé pour la cuisson de pizzas, comprenant les étapes d'étalement d'une boule de pâte sur une surface et de formation d'une tourte à l'intérieur d'un anneau;
insertion de ladite tourte contenue dans ledit anneau dans un four permettant à ladite tourte de reposer directement en contact avec une surface inférieur dudit four;
retrait de ladite tourte hors du four;
retrait de ladite tourte hors dudit anneau.

2. Procédé selon la revendication 1, **caractérisé en ce qu'**il comprend une étape d'ajout de sauce, après ladite étape de formation de ladite tourte à l'intérieur dudit anneau.

3. Procédé selon la revendication 1, **caractérisé en ce qu'**il comprend une étape d'ajout de garnitures après ladite étape de formation de ladite tourte à l'intérieur dudit anneau.

4. Dispositif pour la cuisson de pizzas, **caractérisé en ce qu'**il comprend un anneau dans lequel est formé une tourte pendant qu'il repose sur une surface; ledit anneau étant adapté pour contenir ladite tourte pendant la cuisson de ladite tourte à l'intérieur d'un four, le dessous de ladite tourte reposant directement en contact avec une surface inférieur dudit four.

5. Dispositif selon la revendication 4, **caractérisé en ce que** ledit anneau est constitué d'une paroi d'étendant verticalement.

6. Dispositif selon la revendication 4, **caractérisé en ce que** ledit anneau est constitué d'une paroi inclinée s'étendant vexticalement.
